# EUROPEAN PATENT APPLICATION

(11) **EP 2 660 959 A1**
(43) Date of publication of application: **06.11.2013**
(21) Application number: 12826593.1
(22) Date of filing: 24.07.2012
(51) Int. Cl.: H02K 29/03, H02K 1/06

(54) **BRUSHLESS DIRECT CURRENT MOTOR**

(30) Priority: 05.03.2012 CN 201210055354
(71) Applicant: Zhejiang Yilida Ventilator Co., Ltd., Taizhou City, Zhejiang 318056 (CN)
(72) Inventor: ZHANG, Qizhong, Taizhou Zhejiang 318056 (CN); ZHANG, Wei, Taizhou Zhejiang 318056 (CN)
(74) Representative: Pfenning, Meinig & Partner GbR
(86) International application number: PCT/CN2012/079102
(87) International publication number: WO 2013/131349

(57) **Abstract**

A brushless DC motor, comprising a stator having paired stator teeth, a rotor having paired magnetic poles and a rotating shaft fixed in the center of the rotor, wherein each of the stator teeth is wound with a winding, in each cross section of the stator, the connecting line between the intersection point of a tooth top arc of the stator tooth and the tooth axis of the stator tooth and the center of the tooth top arc can form a mechanical eccentric angle θ with the tooth axis of the stator tooth, which is more than 0 degree and smaller than 90 degrees. The tooth top circle of the stator tooth is designed to be an arc, which is eccentric relative to the rotating center of the rotor, such that the brushless DC motor can eliminate the starting "dead point" and start successfully; a driving current following the rule of sinusoidal wave also can be coordinated, to make air gap magnetic field change uniformly according to the rule of sinusoidal wave, thus reducing the torque ripple and the vibration noise.

## Description

### FIELD OF THE TECHNOLOGY

The present invention relates to electric control technology, and particularly to a brushless DC motor.

### BACKGROUND

A brushless DC motor is a major type of motor, and the basic structure thereof comprises a stator having paired stator teeth, a rotor having paired magnetic poles and a rotating shaft fixed in the center of the rotor, wherein each of the stator teeth is wound with a winding. The working principle of the brushless DC motor is that, a driving current commutated according to a set period is applied to the winding to produce a changing magnetic field between the stator teeth and rotor magnetic poles, such that an electromagnetic torque is produced on the rotor to drive the rotor to rotate.

The brushless DC motors can be classified into permanent-magnet type or excitation type according to the mode of generating magnetism on the rotor magnetic poles; and can also be classified into single-phase, two-phase or four-phase brushless DC motor according to phase number of the winding, winding mode and the commutating period of the driving current, and the basic working principles thereof are similar.

However, in existing brushless DC motors, generally there is a defect ,that is, in the half commutating period of the brushless DC motor, both the electromagnetic torques are zero when the phase angle between the magnetomotive force of the stator and the rotor flux is 0 degree and 180 degrees. Therefore, these two positions are called "dead points", when the rotor is near the "dead point", the starting torque of the motor acting on the rotor is very small, thus the motor is difficult to start.

### SUMMARY

The present invention provides a brushless DC motor, aiming to improve the starting performance of the motor near the starting "dead point".

The present invention provides a brushless DC motor, comprising a stator having paired stator teeth, a rotor having paired magnetic poles and a rotating shaft fixed in the center of the rotor, wherein each of the stator teeth is wound with a winding, wherein, in each cross section of the stator, the connecting line between the intersection point of a tooth top arc of the stator tooth and the tooth axis of the stator tooth and the center of the tooth top arc forms an eccentric angle θ with the tooth axis of the stator tooth, which is more than 0 degree and smaller than 90 degrees.

In the above brushless DC motor, preferably, in each cross section of the rotor, the rim arc of each magnetic pole is axially symmetric relative to the axis of the magnetic pole; when the stator is arranged at the inner side of the rotor, the rim arc of each magnetic pole is concave, and the radius thereof is greater than the rotating radius of the rotor, or, when the stator is arranged at the outer side of the rotor, the rim arc of each magnetic pole is convex, and the radius thereof is smaller than the rotating radius of the rotor.

In the above brushless DC motor, preferably, in each cross section of the rotor, the center of the rim arc of each magnetic pole is continuously arranged in sequence, forming a rotor circle surrounding the outer side of the rotating center of the rotor.

In the above brushless DC motor, preferably, the rim surface of each magnetic pole is a rim cylindrical surface constituted by each rim arc, and the center axis of the rim cylindrical surface of each magnetic pole is parallel with each other

In the above brushless DC motor, preferably, in each cross section of the stator, endpoints at both sides of each rotator tooth are axially symmetric relative to the tooth axis, and a transitional arc is formed between the rim lines at both sides of the stator tooth and the tooth top arc.

In the above brushless DC motor, preferably, in each stator tooth, the transitional arc departing from the side of the center of the tooth top arc is a first transitional arc while the transitional arc adjacent to the side of the center of the tooth top arc is a second transitional arc, and the radius of the first transitional arc is greater than that of the second transitional arc.

In the above brushless DC motor, preferably, the radius of the first transitional arc is 0.1 - 1.0mm, and the radius of the second transitional arc is 0.1 ∼ 0.6mm.

In the above brushless DC motor, preferably, the eccentric angle of each stator tooth is equal; and/or the radius of the tooth top arc of each stator tooth is equal.

In the above brushless DC motor, preferably, in each cross section of the stator, the center of the tooth top arc of each stator tooth is continuously arranged in sequence, forming a stator circle surrounding the outer side of the rotating center of the rotor.

In the above brushless DC motor, preferably, the tooth top arc surface of each stator tooth is a tooth top cylindrical surface constituted by each tooth top arc, and the center axis of the tooth top cylindrical surface of each stator tooth is parallel with each other.

In the above brushless DC motor, preferably, the radius of the rotor circle is greater than that of the stator circle.

In the above brushless DC motor, preferably, the brushless DC motor is a single-phase permanent magnet brushless DC motor, and the numbers of the stator teeth and the rotor magnetic poles are both even.

The above brushless DC motor can further comprise:

a rotor position sensor, configured to detect the current position of the rotor and output the corresponding phase position signal of the rotor;

a controller, connected with the rotor position sensor and configured to generate a driving current signal following the rule of sinusoidal wave to the winding, based on the received phase position signal of the rotor, and achieve a phase change.

In the brushless DC motor provided by the present invention, the tooth top circle of the stator tooth is designed to be an arc, and is eccentric relative to the rotating center of the rotor, such that the brushless DC motor can eliminate the starting "dead point" and start successfully.

### BRIEF DESCRIPTION OF THE DRAWINGS

FIG.1 is a schematic structural diagram of adopting a graded air-gap structure in the prior art;

FIG.2 is a schematic structural diagram of adopting a stepped air-gap structure in the prior art;

FIG.3 is a schematic structural diagram of adopting asymmetric teeth structure in the prior art;

FIG.4 is a schematic structural diagram of adopting an additional groove structure in the prior art;

FIG.5 is a schematic cross-sectional diagram of the stators in a brushless DC motor according to an embodiment of the present invention;

FIG.6 is an enlarged view of position A in FIG.5;

FIG.7 is a schematic cross-sectional diagram of coordination of the stators and the rotors in a brushless DC motor according to an embodiment of the present invention;

FIG.8 is a schematic cross-sectional diagram of the stators in an outer rotor brushless DC motor according to an embodiment of the present invention;

FIG.9 is a schematic cross-sectional diagram of coordination of the rotors and the stators in an outer rotor brushless DC motor according to an embodiment of the present invention.

### DETAILED DESCRIPTION

Embodiment 1

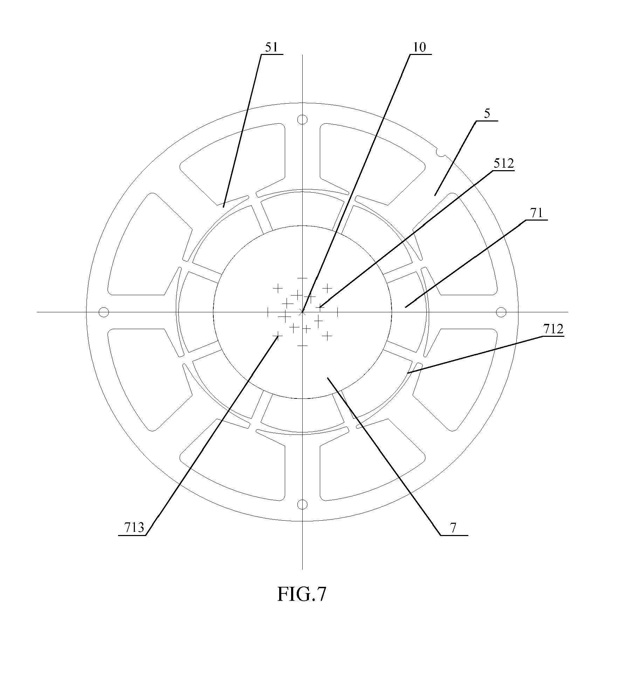

FIG.7 is a schematic cross-sectional diagram of coordination of the stators and the rotors in a brushless DC motor according to an embodiment of the present invention; in this embodiment, the brushless DC motor comprises a stator having paired stator teeth, a rotor having paired magnetic poles and a rotating shaft fixed in the center of the rotor, wherein each of the stator teeth is wound with a winding, and the shape of the stator teeth is optimized and improved. In order to make technical solutions of the embodiments of the present invention clearer, the basic structure of the brushless DC motor is firstly described.

The present invention is not only suitable for an inner rotor motor with rotors arranged at the inner side of stators, but also suitable for an outer rotor motor with rotors arranged at the outer side of stators, and this embodiment is described taking the inner rotor motor for example. As shown in FIG. 7, a rotor 7 is arranged at the inner side of a stator 5, a rotating shaft is fixed in the center of the rotor 7, for example, the rotating shaft can penetrate through the center hole of the rotor 7, and the electromagnetic torque is output through the rotation of the rotor 7. When the rotor 7 rotates, the edge of the rotor at the outermost end inevitably forms a circle, the radius of the circle formed by the rotation of the rotor is represented as the rotating radius of the rotor, and the center of the circle is represented as the rotating center of the rotor.

As shown in FIG. 7, the stator 5 comprises a stator outer circle and stator teeth 51, each of the stator teeth 51 consists of a tooth root and a tooth top. The tooth root, which is of axially symmetric plate-like, extends from the stator outer circle towards the rotating center of the rotor, and two sides of the tooth top respectively extend from two sides of the tooth root to form a slot of a cogging 52; viewed from any cross section of the stator 5, the axis of symmetry of the tooth root is collinear with the rotating radius of the rotor, which is represented as the tooth axis of the stator tooth (the tooth axis is also the connecting line between the center of the tooth root and the rotating center of the rotor).

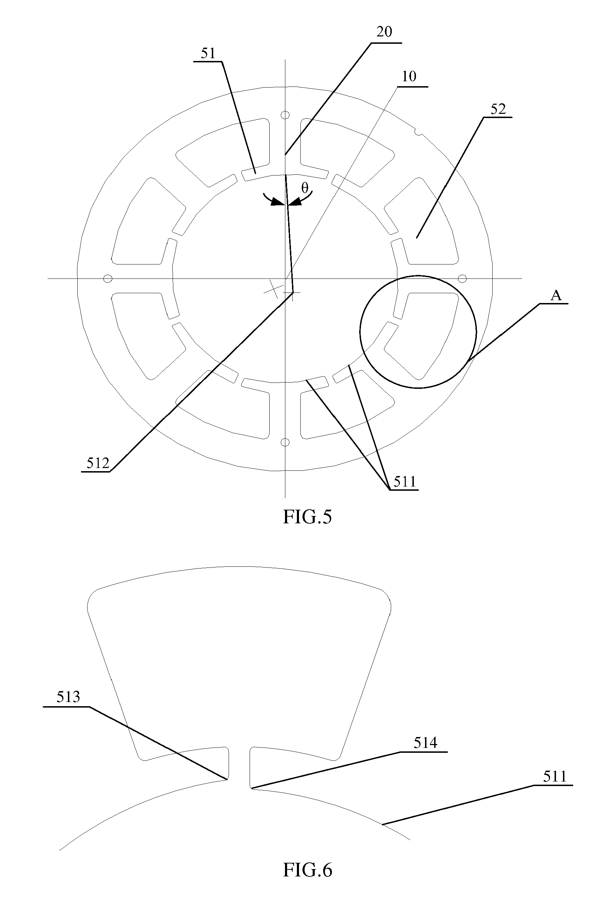

The inner rotor brushless DC motor provided by this embodiment is as shown in FIGs.5-7, comprising a stator 5 having paired stator teeth 51, a rotor 7 having paired magnetic poles 71 and a rotating shaft fixed in the center of the rotor 7, wherein each of the stator teeth 51 is wound with a winding (not shown), and the stator 5 is arranged at the outer side of the rotor 7. In each cross section of the stator 5, the connecting line between the intersection point of a tooth top arc 511 of the stator tooth 51 and the tooth axis 20 of the stator tooth 51 and the center 512 of the tooth top arc 511 forms an eccentric angle θ with the tooth axis 20 of the stator tooth 51, which is more than 0 degree and smaller than 90 degrees.

Particularly, an even number of stator teeth 51 which extend towards the center, can be provided and fixed on the inner side of the stator 5, and the stator teeth 51 are uniformly distributed on the inner side of the stator 5, the stator teeth 51 have the same number and one-to-one correspondence position with the magnetic poles 71 on the rotor 7; wherein, the magnetic poles 71 on the rotor 7 can be a permanent magnet, and can also have magnetism upon energizing. The gap between two adjacent stator teeth 51 is a cogging 52, the stator 5 is immobile and drives the rotor 7 to rotate through the rotating shaft in the center hole of the rotor 7.

The corresponding eccentric angles θ of different pairs of stator teeth 51 can be the same or different, namely, there are various arrangement manners for the center 512 of the tooth top arc 511, for example, the stator teeth 51 in the interval position have the same eccentric angles θ, or the corresponding eccentric angles θ of all the stator teeth 51 are arranged in a successively and progressively increasing manner.

In the brushless DC motor according to this embodiment, due to the presence of the eccentric angle θ, the center 512 of the tooth top arc 511 does not coincide with the rotating center of the rotor, and does not fall on the line of the tooth axis; when the phase between the stator tooth and the magnetic pole is 0 degree and 180 degrees, the input driving current is started, and a differential pressure of the magnetomotive force can be generated due to the presence of the eccentric angle θ, such that the resultant electromagnetic torque at the "dead point" is not zero, the starting "dead point" is eliminated and a good starting performance is achieved.

Preferably, the eccentric angles θ of the each stator teeth 51 above are the same; and/or the radii of the tooth top arc 511 of each the above stator tooth 51 are the same. Viewed from any cross section of the stator tooth, when the eccentric angles θ of the stator teeth 51 are the same; and the corresponding radii of the tooth top arc 511 of each stator tooth 51 above are also the same, in each cross section of the stator 5, the center 512 of the tooth top arc 511 of each stator tooth 51 is continuously arranged in sequence, forming a stator circle surrounding the outer side of the rotating center of the rotor. When the rotor 7 rotates, the size of the eccentric angle θ remains the same, but the magnetic-field vector between the stator teeth 51 and the rotor magnetic poles 71 changes; that is to say, when the motor rotates with a constant rotation speed after starting, the position of the eccentric angle θ remains the same, the magnetic-field vector changes uniformly along with the rotation of the rotor, the obtained reluctance torque is of smooth sinusoidal wave shape gradually, and thus the ripple of the electromagnetic torque output by the motor can be reduced.

In this embodiment, the tooth top arc surface of each stator tooth 51 is a tooth top cylindrical surface constituted by each tooth top arc 511, and the center axis of tooth top cylindrical surface of each stator tooth 51 is parallel with each other. However, the specific application is not limited to this, for example, the cross sections of each stator tooth 51 can have a certain angle deviation and be spirally arranged. The working principle of the eccentric angle in this embodiment is not influenced as long as the requirements on the shape of the cross section of the stator tooth are satisfied.

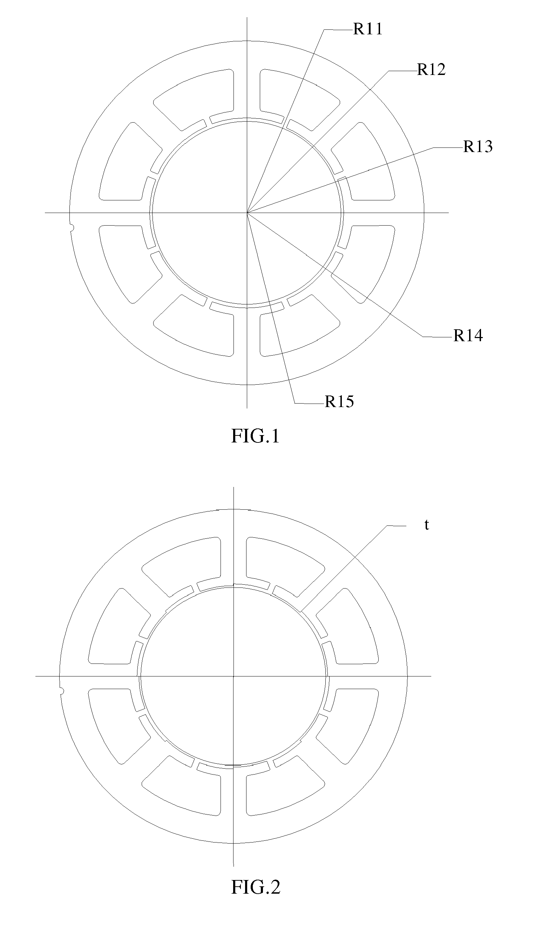

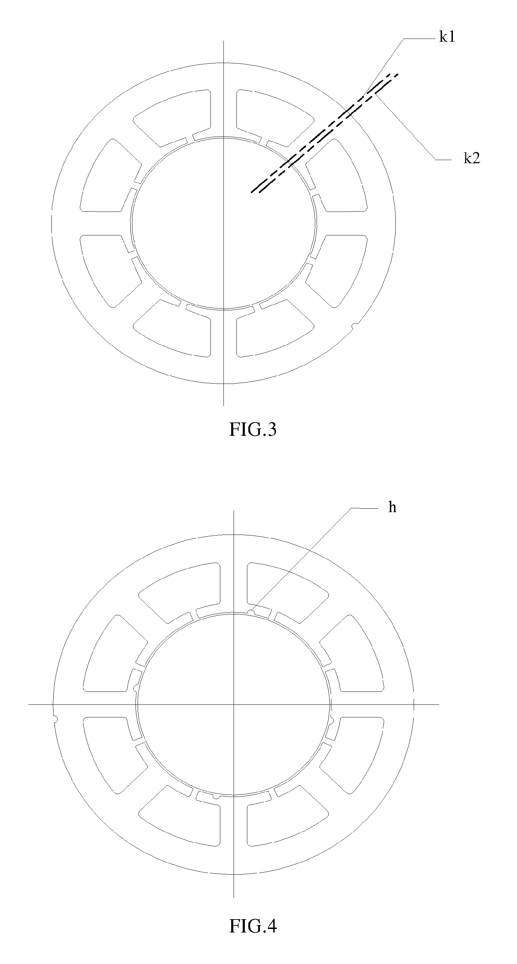

In this embodiment, the center 512 of the tooth top arc 511 of the stator 5 is deviated from the rotating center 10 of the rotor to form the eccentric angle θ, such that the asymmetric torque required during starting is provided, however, in the commonly-used four types of stator structures (graded air-gap structure, stepped air-gap structure, asymmetric teeth structure, additional groove structure) with asymmetric air-gaps in the prior art, all these asymmetric air-gap structures are provided by changing the shape of the tooth top cylindrical surface 511 of the stator teeth 51; particularly referring to FIGs.1-4, in graded air-gap structure, different centers of the tooth top arc of stator tooth are the same while the radii R11, R12, R13, R14 and R15 are different; in stepped air-gap structure, the tooth top arc surface of the same stator tooth forms a suddenly changed step t; in asymmetric teeth structure, the axis of symmetry k2 of the tooth top cylindrical surface of each stator tooth deviates from the axis of symmetry k1 of the stator tooth; in additional groove structure, a groove h is provided on one side of the axis of symmetry of the tooth top cylindrical surface of each stator tooth.

Since the center axes of the tooth top cylindrical surface of the stator tooth in all four types of stator structures in the prior art lie in the rotating center of the rotor, such that sudden changes exists in air-gaps between different stator teeth and rotors, causing the reluctance torque to have a positive peak and a negative peak within a pole pitch, namely, showing a high torque ripple.

Therefore, compared to the four types of stator structures in the prior art, the brushless DC motor provided by this embodiment not only overcomes the problem of the starting "dead point", but also solves the problems in the prior art, such as too high torque ripple and excessive noise during normal running of the motor, and effectively reduces the vibration and noise in the work.

Embodiment 2

This embodiment can further optimize the shape of the rotor structure on the basis of embodiment 1. In this embodiment, in each cross section of the rotor 7, the rim arc 712 of each magnetic pole 71 can be axially symmetric relative to the axis of the magnetic pole; when the stator 5 is arranged at the outer side of the rotor 7, the rim arc 712 of each magnetic pole 71 on the rotor 7 is convex, and the radius thereof is smaller than the rotating radius of the rotor, namely, the center 713 of the rim arc 712 lies between the rim arc 712 and the rotating center of the rotor. Alternatively, the radius of the rim arc 712 can be also equal to the rotating radius of the rotor.

The shape of the rim arc 712 of magnetic pole 71 on each rotor is not necessarily identical, but preferably, in each cross section of the rotor 7, the center 713 of the rim arc 712 of each magnetic pole 71 is continuously arranged in sequence, forming a rotor circle surrounding the outer side of the rotating center 10 of the rotor.

The rim surface of each magnetic pole 71 is preferably a rim cylindrical surface constituted by each rim arc, and the center axis of the rim cylindrical surface of each magnetic pole 71 is parallel with each other. However, it is not limited to this, for example, the magnetic pole 71 extends along a spiral curve in a direction perpendicular to the cross section, or alternatively, the surface of the magnetic pole 71 is a tapered surface and etc.

Wherein, in the case of respectively forming the rotor circle and the stator circle, the radius of the rotor circle is preferably greater than that of the stator circle, or substantially satisfying the rules that, viewed form one cross section, all the centers 512 of the tooth top arcs 511 are arranged to be a circle with a center of the rotating center of the rotor, all the centers 713 of the rim arcs 712 of the magnetic poles 71 are also arranged to be a circle with a center of the rotating center of the rotor, and centers 713 of the rim arcs 712 of the magnetic poles 71 surround the outer side of the centers 512 of the tooth top arcs 511. The surface of the magnetic poles and the tooth top arc surface of the stator both adopt cylindrical surface, which is convenient for processing and manufacturing, and beneficial to save costs.

In this embodiment, the rim surface of the magnetic pole on the rotor is designed to be a rim arc symmetric to the axis of the magnetic pole but not centered on the rotating center of the rotor, such that the air gap magnetic field between the rotor and the stator in this embodiment can have a much smoother change, the ripple of the electromagnetic torque output by the motor can be effectively reduced, and the vibration during working of the motor can be further reduced.

Embodiment 3

FIG.5 is a schematic cross-sectional diagram of the stators in a brushless DC motor according to an embodiment of the present invention, this embodiment can be based on any of the above embodiments, furthermore, in each cross section of the stator 5, endpoints at both sides of each rotator tooth 51 are axially symmetric relative to the tooth axis 20, and a transitional arc is formed between the rim lines at both sides of the stator tooth 51 and the tooth top arc 511.

Herein, the end points at two sides of the stator tooth 51 are the furthest points from the two sides of the tooth top to the tooth axis 20; the tooth top arc surface can be smoothly transited to the tooth side surfaces at the two sides via the arc surface, viewed from the cross section of the stator, the two arc surfaces are the tooth top arcs 511 described above. When the rotor 7 rotates, the design of the arc surface can make the changing of the air gap magnetic field much evener.

Preferably, on each stator tooth 51, the transitional arc departing from the side of the center 512 of the tooth top arc 511 is a first transitional arc 513 while the transitional arc adjacent to the side of the center of the tooth top arc is a second transitional arc 514, and the radius of the first transitional arc 513 is greater than that of the second transitional arc 514. The advantage of such arrangement is that, the sudden change of the air gap magnetic field during rotation of the rotor can be further reduced with the help of the eccentric design of the stator arc.

Further, the radius of the first transitional arc 513 is preferably 0.1 ∼ 1.0mm, and the radius of the second transitional arc 514 is preferably 0.1 ∼ 0.6mm.

The design of the transitional arc surface in this embodiment can be coordinated with the rotation of the rotor, such that the air gap magnetic field between the stator and the rotor can be much smoother and evener, and the changing rule of the air gap magnetic field gets closer to sinusoidal wave, and the purposes of reducing torque ripple and vibration noise can be further achieved.

Embodiment 4

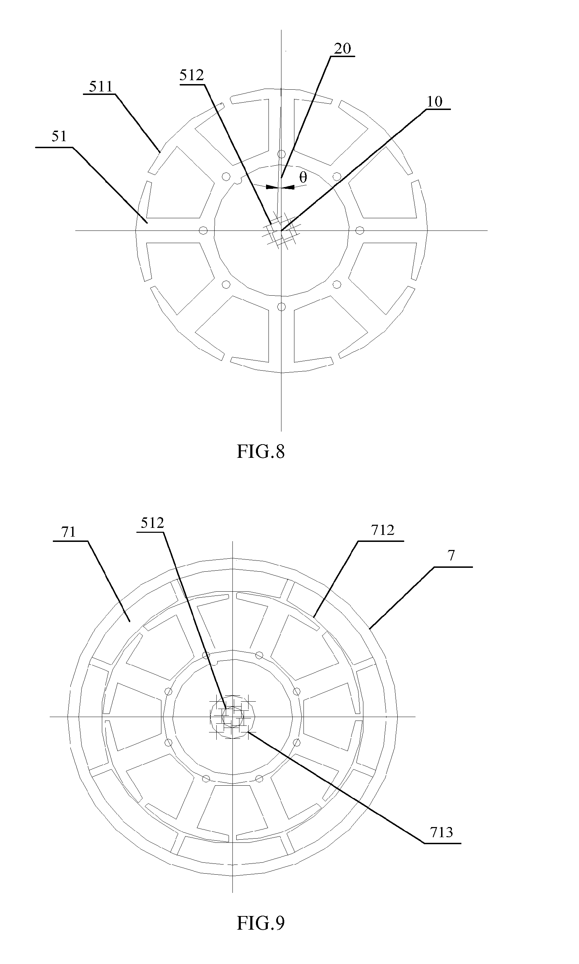

FIG.8 is a schematic cross-sectional diagram of the stators in an outer rotor brushless DC motor according to an embodiment of the present invention; FIG.9 is a schematic cross-sectional diagram of coordination of the rotors and the stators in an outer rotor brushless DC motor according to an embodiment of the present invention. Referring to FIG. 8 and FIG.9, the outer rotor brushless DC motor provided by this embodiment, different from embodiment 1, the rotor 7 is arranged on the outer side of the stator 5, in this way, the rotor 7 is of annular, the stator 5 lies in the center of the rotor 7, the outer side surface of the stator 5 is fixedly provided with an even number of stator teeth 51 which radially extend outwards, the magnetic pole 71 of the rotor 7 is provided on the inner side surface of the rotor 7, and also can have a one-to-one correspondence position with the stator tooth 51, and the rotating shaft fixed in the center of the rotor 7 can drive the rotor 7 to rotate; at this time, viewed from the cross section of the rotor 7, the rim arc 712 of each magnetic pole 71 is concave, and the radius thereof is greater than or equal to the rotating radius of the rotor; similar to embodiment 1, in each cross section of the stator 5, the connecting line between the intersection point of a tooth top arc 511 of the stator tooth 51 and the tooth axis 20 of the stator tooth 51 and the center 512 of the tooth top arc 511 can form an eccentric angle θ with the tooth axis 20 of the stator tooth 51, which is more than 0 degree and smaller than 90 degrees. The structures of the stator 5 and the rotor 7, and the structure relationship between the rotor and the stator can be similar to embodiment 1, and no further discussions will be given here.

Preferably, the corresponding eccentric angles θ of each stator tooth 51 and the radii of the tooth arcs can be the same, and the center 512 of the tooth top arc of each stator tooth 51 is continuously arranged in sequence, forming a stator circle surrounding the outer side of the rotating center of the rotor.

Still further, the structure of the rotor can be further optimized by the manner of embodiment 2, namely, in each cross section of the rotor 7, the rim arc 712 of each magnetic pole 71 is axially symmetric relative to the axis of the magnetic pole, and in the case when the rotor 7 is arranged at the outer side of the stator 5, the rim arc 712 of each magnetic pole 71 on the rotor 7 is concave, and the radius thereof is smaller than the rotating radius of the rotor; the shape of the rim arc 712 of each magnetic pole 71 on the rotor 7 can be the same or different, the center 713 of the rim arc 712 of each magnetic pole 71 is continuously arranged in sequence, forming a rotor circle surrounding the outer side of the rotating center 10 of the rotor; most preferably, in the case of respectively forming the rotor circle and the stator circle, the radius of the rotor circle is greater than that of the stator circle (see FIG.9).

Likewise, the outer rotor brushless DC motor provided by this embodiment can improve the starting performance of the motor near the starting "dead point", and meanwhile, also can reduce the torque ripple during normal running to achieve the purpose of reducing vibration and noise.

The brushless DC motor provided by embodiments of the present invention can be applicable to single-phase, two-phase or four-phase brushless DC motor, the working principles thereof are similar, and all can improve the starting performance. However, embodiments of the present invention are preferably applicable to a single-phase permanent-magnet brushless DC motor, because the single-phase winding can effectively reduce the production cost, and meanwhile obtain a higher frequency. The number of the stator teeth 51 of the brushless DC motor can be even, for example four, six or eight, correspondingly, the number of the magnetic poles on the rotor of the brushless DC motor also can be even, for example four, six or eight; inner rotor or outer rotor motor can be adopted, wherein, stator structure, rotor structure and the structure relationship between rotor and stator can adopt the specific solutions in embodiment 1 and embodiment 2, and no further discussions will be given here.

The single-phase permanent-magnet brushless DC motor provided by this embodiment can overcome the starting "dead point" of the single-phase permanent-magnet brushless DC motor in the prior art and guarantee successful starting, and meanwhile, also can obtain an air gap magnetic field following the rule of sinusoidal wave, thus obtain an uniform variable torque, and effectively reduce the torque ripple.

Still further, the single-phase brushless DC motor according to any one of the preceding embodiments, further comprising:

a rotor position sensor, configured to detect current position of the rotor and output the corresponding phase position signal of the rotor;

a controller, connected with the rotor position sensor and configured to generate a driving current signal following the rule of sinusoidal wave to the winding based on the received phase position signal of the rotor, and achieve a phase change.

Particularly, the controller and the winding can be connected with the driving circuit respectively, so as to input the driving current signal to the winding on the stator, and change the direction of the driving current via the controller to achieve a phase change.

That is, the brushless DC motor of the present invention can be driven by a sinusoidal current signal, and make the counter electromotive force of the winding following the rule of sinusoidal wave by means of the phase compensating effect of the controller, such that the air gap magnetic field is changed following the rule of much purer sinusoidal wave, the torque ripple can be further reduced, and the noise reduction effect is much better.

Finally, it should be noted that the above embodiments are merely provided for describing the technical solutions of the present invention, but not intended to limit the present invention. It should be understood by those skilled in the art that although the present invention has been described in detail with reference to the foregoing embodiments, modifications can be made to the technical solutions described in the foregoing embodiments, or equivalent replacements can be made to some technical features in the technical solutions; however, such modifications or replacements do not cause the essence of corresponding technical solutions to depart from the spirit and scope of the embodiments of the present invention.

## Claims

1. A brushless DC motor, comprising a stator having paired stator teeth, a rotor having paired magnetic poles and a rotating shaft fixed in a center of the rotor, wherein each of the stator teeth is wound with a winding, **characterized in that**:
in each cross section of the stator, the connecting line between an intersection point of a tooth top arc of the stator tooth and a tooth axis of the stator tooth and a center of the tooth top arc forms an eccentric angle θ with the tooth axis of the stator tooth, which is more than 0 degree and smaller than 90 degrees.

2. The brushless DC motor according to claim 1, **characterized in that**:
in each cross section of the rotor, a rim arc of each magnetic pole is axially symmetric relative to an axis of the magnetic pole;
when the stator is arranged at an inner side of the rotor, the rim arc of each magnetic pole is concave, and the radius thereof is greater than a rotating radius of the rotor, or, when the stator is arranged at an outer side of the rotor, the rim arc of each magnetic pole is convex, and the radius thereof is smaller than the rotating radius of the rotor.

3. The brushless DC motor according to claim 2, **characterized in that**:
in each cross section of the rotor, the center of the rim arc of each magnetic pole is continuously arranged in sequence, forming a rotor circle surrounding the outer side of the rotating center of the rotor.

4. The brushless DC motor according to claim 3, **characterized in that**:
a rim surface of each magnetic pole is a rim cylindrical surface constituted by each rim arc, and the center axis of the rim cylindrical surface of each magnetic pole is parallel with each other.

5. The brushless DC motor according to claim 1, **characterized in that**:
in each cross section of the stator, endpoints at both sides of each rotator tooth are axially symmetric relative to the tooth axis, and a transitional arc is formed between rim lines at both sides of the stator tooth and tooth top arc.

6. The brushless DC motor according to claim 5, **characterized in that**:
in each stator tooth, the transitional arc departing from the side of the center of the tooth top arc is a first transitional arc while the transitional arc adjacent to the side of the center of the tooth top arc is a second transitional arc, and the radius of the first transitional arc is greater than that of the second transitional arc.

7. The brushless DC motor according to claim 6, **characterized in that**:
the radius of the first transitional arc is 0.1 ∼ 1.0mm, and the radius of the second transitional arc is 0.1 ∼ 0.6mm.

8. The brushless DC motor according to any one of claims 1-7, **characterized in that**:
the eccentric angle of each stator tooth is equal; and/or
the radius of the tooth top arc of each stator tooth is equal.

9. The brushless DC motor according to any one of claims 1-7, **characterized in that**:
in each cross section of the stator, the center of the tooth top arc of each stator tooth is continuously arranged in sequence, forming a stator circle surrounding the outer side of the rotating center of the rotor.

10. The brushless DC motor according to claim 9, **characterized in that**:
the tooth top arc surface of each stator tooth is a tooth top cylindrical surface constituted by each tooth top arc, and the center axis of the tooth top cylindrical surface of each stator tooth is parallel with each other.

11. The brushless DC motor according to claim 10, **characterized in that**:
the radius of the rotor circle is greater than that of the stator circle.

12. The brushless DC motor according to any one of claims 1-7, **characterized in that**:
the brushless DC motor is a single-phase permanent magnet brushless DC motor, and the numbers of the stator teeth and the rotor magnetic poles are both even.

13. The brushless DC motor according to any one of claims 1-7, further comprising:
a rotor position sensor, configured to detect the current position of the rotor and output the corresponding phase position signal of the rotor;
a controller, connected with the rotor position sensor and configured to generate a driving current signal following the rule of sinusoidal wave to the winding based on the received phase position signal of the rotor, and achieve a phase change.
